# EUROPEAN PATENT APPLICATION

(11) **EP 4 775 935 A1**
(43) Date of publication of application: **15.07.2026**
(21) Application number: 25290002.2
(22) Date of filing: 13.01.2025
(51) Int. Cl.: G01F 23/22, G01F 23/80

(54) **SENSOR SYSTEM FOR MONITORING CHARACTERISTICS OF A DEWAR TANK**

(71) Applicant: AIRBUS Operations GmbH, 21129 Hamburg (DE); Airbus (S.A.S.), 31700 Blagnac (FR)
(72) Inventor: Barrios, Ricardo, 31700 Blagnac (FR); Meyerhoff, Thomas, 31700 Blagnac (FR); Geisler, Helge, 21129 Hamburg (DE)
(74) Representative: LKGLOBAL Partnerschaftsgesellschaft mbB

(57) **Abstract**

A sensor system (10) for monitoring characteristics of a dewar tank (20) having an inner shell (21) and an outer shell (22) is provided. The sensor system (10) comprises a sensor arrangement (16) comprising a first magnetic field sensor (11), and a first permanent magnet element (12), and a controller (13). The first magnetic field sensor (11) is connected to the controller (13). The first magnetic field sensor (11) is configured to be attached to the outer shell (22) of the dewar tank (20). The first permanent magnet element (12) is configured to be attached to the inner shell (21) or to the outer shell (22) of the dewar tank (20). The first magnetic field sensor (11) and the first permanent magnet element (12), in a mounted state on the dewar tank (20), are configured to be located in the vicinity of each other, such that the magnetic field sensor (11) is capable of detecting a magnetic field created by the first permanent magnet element (12). The controller (13) is configured to measure, via the first magnetic field sensor (11), the magnetic field of the first permanent magnet element and to infer at least one characteristic of the dewar tank (20) based on the detected magnetic field of the first permanent magnet element (12).

## Description

### TECHNICAL FIELD

The present disclosure relates to sensor systems for fluid tanks, and in particular to a sensor system for monitoring characteristics of a dewar tank.

### TECHNICAL BACKGROUND

In light of increasing environmental protection efforts, alternative propulsion sources for aircrafts are developed. Such alternative propulsion sources may use alternative fuels other than kerosene fuel, such as liquid hydrogen, which cannot be stored in regular fuel tanks. Hydrogen fuel or other liquid gas fuels therefore need to be stored in suitable tanks (such as dewar tanks), which must, e.g., withstand the necessary internal pressure and low temperature (20K) to store the gas in a liquid state. However, for safety reasons, it is also necessary to monitor certain characteristics of the tank, such as the filling level, temperature, etc. of the fuel tank accurately at any time.

For example, currently, filling levels of fluid tanks can be determined by measuring the weight of the tank or indirectly by monitoring the flow out of the tank. However, these methods are either not very accurate or may not be suitable to be used in aircraft applications. For example, soft suspensions (such as those found in weighing scales) cannot be easily introduced in moving vehicles. An aircraft may, for example, experience changes in altitude and during such ascend or descent flight segments of the aircraft, the gravity vector may not be constant with regard to the fuel tank, leading to difficulties in determining an accurate weight value and therefore filling level. The same applies for curved flight segments in which the aircraft changes its flight vector. Further, sensing solutions such as those used for Kerosene sensing implemented today in wings of aircraft cannot be used for hydrogen tanks for safety reasons (electronic instruments and hydrogen should be separated) and insulation (leakage) reasons.

Therefore, for measuring the filling level of hydrogen tanks, a non-intrusive sensing system for cryogenic tanks, in particular in aircraft applications, has previously been described in several patent applications of the applicant. The interpretation of vibration-based measurements is one of these solutions. Before these inventions, a very limited set of technical options were available for this purpose.

A general approach for determining the filling level of fluid tanks by monitoring resonance frequencies of the fluid tanks has, for example, been described in the patent application WO 2023 / 217 807 A1 (briefly described below) of the applicant, which illustrates a concept and gauging principles.

WO 2023 / 217 807 A1 describes a filling level monitoring device for liquid tanks, such as hydrogen tanks, a hydrogen tank comprising such a filling level monitoring device and an aircraft comprising such a hydrogen tank. The filling level monitoring device uses a signal source and exciting elements to couple vibrational loads having a multitude of frequency components into a container. Resonance frequencies of the container are depending on the filling level of the container. Sensing elements measure vibrations in the container after the exciting elements coupled the vibrational loads into the container. A processing unit performs spectral analyses of the input signal from the signal source and of vibration signals from the sensing elements and compares the spectral functions of the input signal and the vibration signal(s) to extract resonance frequencies. The resonance frequencies of the container are further depending on the spatial orientation of the container. A filling level indicator unit calculates a current filling level of the container from the extracted resonance frequencies and a spatial orientation signal from a spatial orientation sensor by correlating the collected data with reference data.

As indicated further above, liquid hydrogen (LH2) for aviation application is to be stored preferably in cylindrical dewar type tanks, where the cylinder axis is horizontal to ground, although other shapes are also possible. Such dewar tanks comprise an inner shell an outer shell. The inner shell encloses the liquid hydrogen. The outer shell surrounds the inner shell.

The space between the inner shell and the outer shell is filled with a high quality vacuum. To minimize the leakage of LH2 and maintain the required cryogenic temperatures as best as possible, the tank is welded during manufacturing.

Preferably, when monitoring characteristics of the tank, such as for determining a filling level, or for measuring temperature, or for any other application, these characteristics need to be monitored at the inner shell, which is in direct contact with the LH2. This creates the problem that any equipment (such as, for example, vibrations sensor used for determining the filling level by means of the vibration based measuring of resonance frequencies, as described for example in WO 2023 / 217 807 A1 or temperature sensors, etc.) inside the tank, in particular on the inner shell, in need of replacement/maintenance requires the tank to be completely dismantled and cut open. Thus, inline maintenance/repair of such elements is not possible, increasing considerably out of service time and cost to execute such operations. The material used for the manufacturing of the dewar tank is of non-magnetic nature and is made, for example, from aluminum, non-magnetic alloys of stainless steel, CFRP, etc., which are permeable for magnetic fields.

### DESCRIPTION

It is an objective to provide a sensor system for monitoring characteristics of a dewar tank that allows for simple and time saving maintenance in case of failure of sensor components that, in particular, does not afford for the dewar tank to be dismantled and cut open to replace active components.

This objective is solved by the subject matter of the independent claims. Further embodiments are described in the dependent claims as well as in the following description.

According to a first aspect, a sensor system for monitoring characteristics of a dewar tank having an inner shell and an outer shell is provided. The sensor system comprises a sensor arrangement comprising a first magnetic field sensor, and a first permanent magnet element, and a controller. The first magnetic field sensor is connected to the controller. The first magnetic field sensor is configured to be attached to the outer shell of the dewar tank. The first permanent magnet element is configured to be attached to the inner shell or to the outer shell of the dewar tank. The first magnetic field sensor and the first permanent magnet element, in a mounted state on the dewar tank, are configured to be located in the vicinity of each other, such that the magnetic field sensor is capable of detecting a magnetic field created by the first permanent magnet element. The controller is configured to measure, via the first magnetic field sensor, the magnetic field of the first permanent magnet element and to infer at least one characteristic of the dewar tank based on the detected magnetic field of the first permanent magnet element.

As indicated in the introduction, liquid hydrogen (or in principle any other cryogenic fluid) can preferably be filled in dewar tanks having an inner shell and an outer shell. In the assembled state of the dewar tank between the inner shell and the outer shell, a high quality vacuum is present for insulation purposes. Active sensors placed on the inner shell could need replacement or maintenance at some point after assembly, which is difficult because the dewar tank would need to be dismantled and cut open. The present invention avoids this in that no active components are placed on the inner shell. Instead, all the active components are arranged on the outer shell and only non-active components that do not need replacement or maintenance such as permanent magnet elements or, in some embodiments, superconductor elements are arranged on the inner shell. The disclosed sensor system used the fact that magnetic fields can pass through metals, in particular the ones used for manufacturing dewar tanks.

The sensor arrangement comprises at least one magnetic field sensor and at least one permanent magnet element which together build a functional sensor, for example for measuring vibrations or temperature of the inner shell, which contains the fluid filling. Such vibration measurements can, for example, be used for measuring the filling level by means of the monitoring of resonance frequencies, as indicated in the introduction. It should be appreciated that, in some embodiments, the sensor system may comprise multiple sensor arrangements, as described further below with regard to an embodiment.

In the simplest case, such a sensor arrangement comprises one magnetic field sensor and one permanent magnet element. The permanent magnet element is arranged on top of the inner shell and the magnetic field sensor is places on top of the outer shell, in particular above the permanent magnet element or at least in the vicinity of the permanent magnet element such that it can pick up the magnetic field of the permanent magnet element. The magnetic field sensor is connected the controller which serves to evaluate the measurement data. The magnetic field sensor can be any suitable sensor, such as a fluxgate sensor, Hall Effect sensor, magnetoresistive sensor, inductive sensor, SQUID (Superconducting Quantum Interference Devices) sensor (if the necessary conditions are established), optically pumped magnetometer, Wiegand sensor, Magneto-Optical sensor, or any other suitable kind of magnetic field sensor. However, this enumeration is only exemplary in nature and not limiting.

The permanent magnet element(s) can be any suitable permanent magnet, such as, for example, a samarium-cobalt magnet (SmCo magnet), a neodymium-iron-boron magnet (NdFeB magnet), or any other suitable permanent magnet, depending on the use case. For example, SmCo magnets show a relatively stable magnetization at cryogenic temperatures and are therefore particularly useful for use cases in which such stable magnetization is desired, for example for measuring vibrations. NdFeB magnets, on the other hand, are more sensitive to temperature changes. Sintered NdFeB magnets exhibit negative dependence of remanent fields against temperature, typically -0.1%/K around room temperature. This means the magnetic field increases when reducing temperature down to about 140K, where due to a spin reorientation process the magnetic field starts to decrease. Such NdFeB magnets are therefore in particular useful for measuring temperature, since their magnetic field is very sensitive to temperature changes.

In general, permanent magnet elements produce a static magnetic field (in some cases under stable conditions, such as under stable temperature conditions (e.g., NdFeB magnets)). This static magnetic field can, for example be used to measure vibrations in the following way: Since the permanent magnet element is arranged on the inner shell, if the inner shell vibrates, the permanent magnet element vibrates together with it in unison. The inner shell, in turn, vibrates with regard to the outer shell. Since the magnetic field sensor is placed near the permanent magnet element, in particular above it on the outer shell, the magnetic field lines of the permanent magnet element (which are, of course, closed field lines extending from the north pole to the south pole of the permanent magnet element) penetrate the magnetic field sensor in a different way, depending on the relative position of the inner shell (in with it the permanent magnet element) to the outer shell (and with it the magnetic field sensor). In other words, when the inner shell vibrates with regard to the outer shell, the change of the relative position of the inner shell with regard to the outer shell leads to changes in the magnetic field that is picked up by the magnetic field sensor, which changes can be tracked over time to get a time series signal of the vibrations from the magnetic field sensor. Such a time series signal can then, for example, be used in the filling level monitoring measurement described by the application in WO 2023 / 217 807 A1, as indicated in the introduction.

In the case of temperature measurement, changes in the field strength and/or orientation/shape of the magnetic field lines caused by temperature changes can be picked up by the magnetic field sensors, in particular, if the magnetization of the permanent magnet element is highly sensitive to such changes. The corresponding measurement signal can then be correlated to distinct temperatures, for example based on a calibration, physical model, by machine learning, or in any other suitable way.

The above use cases of vibration and temperature measurement are only exemplary in nature. In principle, the sensor system can also be used to measure other characteristics of the dewar tank. For example, a higher pressure may lead to slight deformations of the inner shell which leads to a (slightly) different arrangement of the inner shell relative to the outer shell, which would also change the magnetic field at the location of the corresponding magnetic field sensor. Such changes could therefore also be detected by the magnetic field sensor(s) and could be correlated to an internal pressure of the dewar tank, for example my means of a calibration, a physical model, by machine learning, or in any other suitable way. Other use cases are conceivable, too. The present disclosure therefore is not limited to any one of these use cases.

In another example, corresponding measurement could also be achieved by placing both, the magnetic field sensor and the permanent magnet element on top of the outer shell next to each other with a certain gap. In such a configuration, additionally another passive element (such as a superconductor element), that distorts the magnetic field lines is placed below the permanent magnet element and/or below the magnetic field sensor. The magnetic field sensor(s) then tracks the changes in the magnetic field lines closing differently due to the presence of the superconductor element. These changes are again directly correlated with the relative movement/position between the inner shell and the outer shell.

In any of the configurations described herein, the position and shape of all required permanent magnet elements, superconductor elements, etc. are to be optimized with respect to the resolution and dynamic range of the magnetic field sensors.

According to an embodiment, the at least one characteristic comprises at least one of the following: a temperature of the dewar tank, and a filling level of the dewar tank based on at least one vibration mode of the dewar tank that is correlated to the filling level.

The vibration and temperature measurement itself has been described in detail further above. For measuring the filling level by means of vibration modes, for example, suspension modes (vibrations modes of suspension elements) or horizontal vibration modes (vibration modes that correspond to vibrations that propagate horizontally within the dewar tank) are in particular useful for determining a filling level of the dewar tank because these modes are highly correlated to a filling level of the dewar tank, as described in previous patent applications of the applicant.

According to another embodiment, the first permanent magnet element is of one of the following types: a samarium-cobalt magnet, SmCo magnet, and a neodymium-iron-boron magnet, NdFeB magnet.

A SmCo magnet show a relatively stable magnetization at cryogenic temperatures, especially the ones used for liquid hydrogen. An SmCo magnet therefore is particularly useful if such a stable magnetization is desired, for example for vibration measurements. An NdFeB magnet on the other hand is more sensitive to temperature changes. This property can, for example, be exploited for temperature measurements.

According to another embodiment, the sensor arrangement further comprises a second permanent magnet element that is of a different type than the first permanent magnet element. The first permanent magnet element and the second permanent magnet element are both configured to be attached to the inner shell of the dewar tank.

In particular, the first permanent magnet element and the second permanent magnet element may either both be associated with a single magnetic field sensor (i.e., both permanent magnet elements may be placed on the inner shell near the magnetic field sensor, such that the magnetic field sensor can pick up the magnetic field of both permanent magnet elements), or each of the first permanent magnet element may be associated with an individual magnetic field sensor. In the first case, the individual signals picked up by the single sensor from the two permanent magnet elements can be distinguished by corresponding data analysis algorithms, for example based on a calibration. In the latter case, the individual signals can directly be distinguished by the signals of the individual magnetic field sensor.

In particular, the first permanent magnet element and the second permanent magnet element (or rather their magnetizations) may have different sensitivities/characteristics with regard to characteristics of the dewar tank to be monitored. For example, the first permanent magnet element may be a SmCo magnet (stable with regard to temperature changes) and the second permanent magnet element may be a NdFeB magnet (temperature sensitive). However, other combinations are conceivable, too. Such a combination of different types of permanent magnet elements may provide additional information to improve accuracy of the corresponding measurement. Further, such a combination could add redundancy.

According to another embodiment, the sensor arrangement further comprises a second magnetic field sensor. The first permanent magnet element is configured to be arranged below the first magnetic field sensor. The second permanent magnet element is configured to be arranged below the second magnetic field sensor.

This configuration allows to directly distinguish between magnetic signals from both permanent magnet elements and has been described above.

According to another embodiment, the first permanent magnet element is of a type that is stable with regard to changes in temperature. The second permanent magnet element is of a type that is relatively more sensitive to changes in temperature.

In this configuration, the presence of two types of permanent magnet elements (provided that both are previously and individually calibrated against temperature) can provide additional information to improve the accuracy of the measurement system. The two different permanent magnet elements could also be sensitive (e.g., the slope of the magnetic field over temperature is relatively high) to temperature changes in different temperature regions, thereby increasing the sensitive range of the overall sensor arrangement for temperature changes. The second permanent magnet element being "more sensitive" to temperature changes can mean that the first permanent magnet element is largely insensitive to such temperature changes while the first permanent magnet element is not, or it can mean that the second permanent magnet element is sensitive to temperature changes over a larger range of temperatures.

According to another embodiment, the first permanent magnet element is a samarium-cobalt magnet (SmCo magnet). The second permanent magnet element is a neodymium-iron-boron magnet (NdFeB magnet).

According to another embodiment, the sensor system further comprises a superconductor element that becomes superconducting at cryogenic temperatures. The first magnetic field sensor and the first permanent magnet element are both configured to be attached to the outer shell of the dewar tank next to each other. The superconducting element is configured to be attached to the inner shell of the dewar tank below the first permanent magnet element and/or below the magnetic field sensor.

In this arrangement both the magnetic field sensor and the permanent magnet element are arranged in the vicinity of each other on the outer shell, leaving them accessible for replacement/maintenance, if necessary, without dismantling the dewar tank. In order to still be able to monitor the relative movement of the inner shell to the outer shell (or any other suitable property of the inner shell, as described herein), instead of a permanent magnet element, a superconductor element that becomes superconducting at cryogenic temperatures is arranged below the magnetic field sensor, below the permanent magnet element, or below both.

In general, a superconductor influences magnetic field lines in unique ways, primarily through the Meissner-Ochsenfeld effect, which actively expels magnetic fields. The behavior depends on whether the material is a Type-I or Type-II superconductor. The Meissner-Ochsenfeld Effect can be described as follows: when a material transitions into the superconducting state, it completely expels magnetic field lines from its interior. This occurs regardless of whether the magnetic field is applied before or after the transition. This effect is caused by currents forming on the superconductor's surface, which generate a magnetic field that precisely cancels the external field. Hence, inside the superconductor, the magnetic field vanishes.

In a Type-I superconductor magnetic fields below a critical threshold are fully expelled. When the magnetic field exceeds this threshold, the superconductor loses its superconducting properties and reverts to a normal conducting state. Examples for Type-1 superconductors are pure metals like mercury or lead.

Type-II superconductors exhibit two critical magnetic field strengths: below a lower critical field, they behave like Type-I superconductors (complete expulsion of the magnetic field). Between the lower and an upper critical field, they enter a mixed state: magnetic field lines penetrate the superconductor in the form of flux vortices, surrounded by superconducting regions. Above the upper critical field, the material transitions to a normal state. Examples for Type-II superconductors are high-temperature superconductors such as YBCO (Yttrium-Barium-Copper-Oxide).

In summary, a superconductor has the following effects on magnetic field lines relevant for this embodiment of the invention: A superconductor expels magnetic field lines (shielding; Meissner effect). Further, in Type-II superconductors, magnetic field lines can enter as quantized vortices. Overall, these effects lead to a distortion of the magnetic field lines generated by the permanent magnet element. This distortion depends on the relative arrangement between the superconductor element and the permanent magnet element. Hence, since the superconductor element is arranged on the inner shell and the permanent magnet element is arranged on the outer shell, relative movement of the inner shell to the outer shell influences the magnetic field lines which are picked up / measured by the magnetic field sensor on the outer shell. Further, the superconducting effect also depends on the temperature within the superconducting range, such that, for example, temperature changes can also be detected.

Using superconductor elements on the inner shell and the permanent magnet element(s) on the outer shell allows to replace the permanent magnet element, if it (for example) for some reason gets demagnetized.

According to another embodiment the sensor system comprises at least two sensor arrangements.

For example, multiple sensor arrangements (which may each be configured as described with regard to any one of the embodiments described herein; individual sensor arrangements can be configured differently from each other or all of the sensor arrangements can be identical in type, depending on the use case) can be arranged at different locations of the dewar tank, for example spaced from each other around a circumferential direction of the dewar tank.

By placing a sensor arrrangement on different positions across the cylindrical walls of the dewar tank, for example displacements and temperature can be monitored in different locations. For exampel by using long filters in the time domain (to reduce the effect of random vibration and read out noise) over the data collected in each sensing point (i.e., from each sensor arrangement), deviations from the expected cross section of the inner shell can be estimated, which, for example, allow for the monitoring of deformations and stress. Further, through a proper model (or, for example, a machine learning algorithm which is trained by proper training data) internal pressure may also be estimated.

According to another embodiment, the sensor arrangement further comprises a magnetic shielding for shielding the magnetic field sensor and/or the permanent magnet element from stray magnetic fields.

Stray magnetic fields could be picked up by the magnetic field sensor(s) and therefore distort the measured characteristics. Therefore, in order to get accurate measurement results, the magnetic field sensor(s) can be shielded against such stray magnetic fields, for example by means of a cap, made from a high magnetic permeability material such as Mu-metal (a nickel-iron soft ferromagnetic material) or any other suitable material, that is placed above the corresponding magnetic field sensor. Since the permanent magnet material is placed below or next to the magnetic field sensor, such a shielding could also shield the permanent magnet element(s) from stray magnetic fields that could lead to demagnetization of the permanent magnet element(s).

According to a second aspect, a hydrogen tank is provided. The hydrogen tank comprises a dewar tank for holding liquified hydrogen, the dewar tank having an inner shell and an outer shell, and a sensor system according to any one of the embodiments described herein.

According to a third aspect, a vehicle is provided. The vehicle comprises a fuselage, and a hydrogen tank as described herein. The sensor system is configured to monitor the hydrogen filling level of the fluid container.

The vehicle may be any kind of vehicle, such as an aircraft, a road vehicle such as an automobile, a semi-truck, or a truck, a water vehicle such as a boat or ship, a spacecraft, or any other suitable vehicle.

According to an embodiment, the vehicle is an aircraft.

In summary, the present disclosure provides a sensor system for monitoring certain characteristics of a dewar tank. Such characteristics may, for example and without limitation, comprise vibrations, temperature, pressure, deformations, stress monitoring, and any other conceivable quantity that can be measured by means of the sensor arrangements of the disclosed sensor system. For example, vibration measurements could be used to determine a filling level of the dewar tank by means of monitoring vibration modes that are sensitive to the filling level. Since all the active components (magnetic field sensors) are arranged on the outer shell of the dewar tank, these components can be easily replaced/maintained without having to cut open or dismantle the dewar tank, thereby reducing system complexity and maintenance times while still allowing to measure/monitor characteristic of the dewar tank at the inner shell.

### BRIEF DESCRIPTION OF THE DRAWINGS

In the following, exemplary embodiments are described in more detail having regard to the attached figures. The illustrations are schematic and not to scale. Identical reference signs refer to identical or similar elements. The figures show:
- **Fig. 1**: a schematic view of a hydrogen tank in the form of a dewar tank for which the sensor system disclosed herein can be used.
- **Fig. 2**: a schematic overview of at least a part of a sensor system, mounted onto the dewar tank of Fig. 1, comprising a sensor arrangement having a first magnetic field sensor and a first permanent magnet element according to a first exemplary configuration.
- **Fig. 3**: a schematic overview of at least a part of a sensor system, mounted onto the dewar tank of Fig. 1, comprising a sensor arrangement having a first magnetic field sensor, a first permanent magnet element, and a superconductor element according to a second exemplary configuration.
- **Fig. 4**: a schematic overview of at least a part of a sensor system, mounted onto the dewar tank of Fig. 1, comprising a sensor arrangement having a first magnetic field sensor, a second magnetic field sensor, a first permanent magnet element, and a second permanent magnet element according to a third exemplary configuration.
- **Fig. 5**: a schematic overview of a dewar tank having four sensor arrangements mounted thereon.
- **Fig. 6**: a circuit diagram of an exemplary magnetic field sensor.
- **Fig. 7**: a schematic illustration of an aircraft comprising a hydrogen tank having a sensor system according to one of the embodiments described herein.

### DETAILED DESCRIPTION

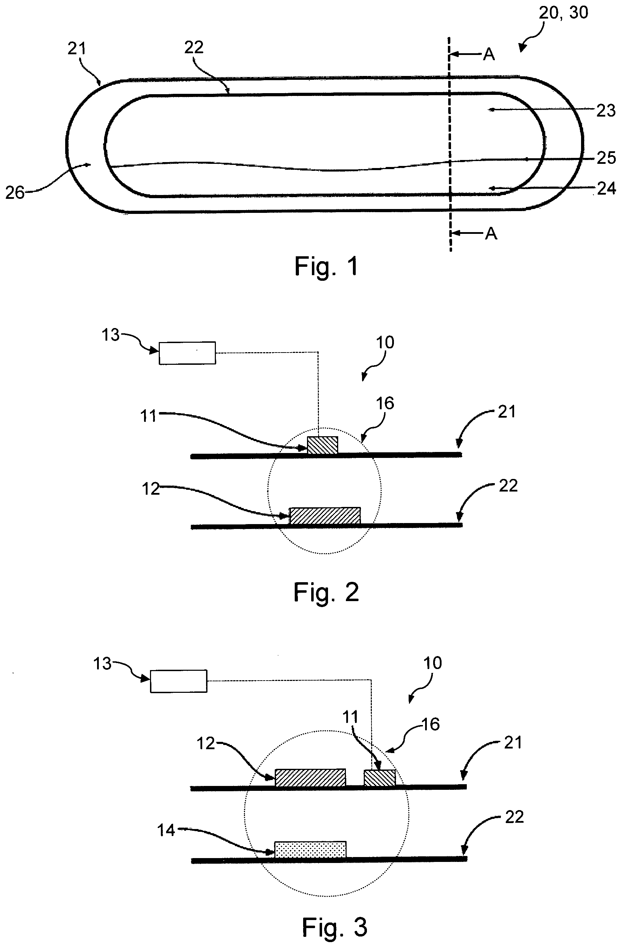

Fig. 1 shows a schematic overview of a hydrogen tank 30 in the form of a dewar tank 20. The dewar tank 20 comprises an inner shell 22 and an outer shell 21. Between the inner shell 22 and the outer shell 21, a high quality vacuum 26 is present for insulation purposes in order to maintain cryogenic temperatures within the dewar tank 20. The inner shell 22 is a wall of a fluid container within which a fluid can be stored (in this case hydrogen). The dewar tank 20 is shown having a filling with a liquid phase of liquid hydrogen 24 and a gaseous phase of gaseous hydrogen 23. It should be appreciated that the present disclosure is not limited to hydrogen tank but rather is applicable to any dewar tank 20 for any fluid. A gas/liquid interface 25 separates the liquid hydrogen 24 from the gaseous hydrogen 23. In order to monitor characteristics such as a filling level, a temperature, a pressure, etc. in the state of the art, corresponding sensor such as vibration sensors or temperature sensors need to be attached to the inner shell 22 because this shell is in contact with the filling of the dewar tank 20. However, this affords for the dewar tank to be dismantled in case of replacement/maintenance of the corresponding sensors, as described herein further above.

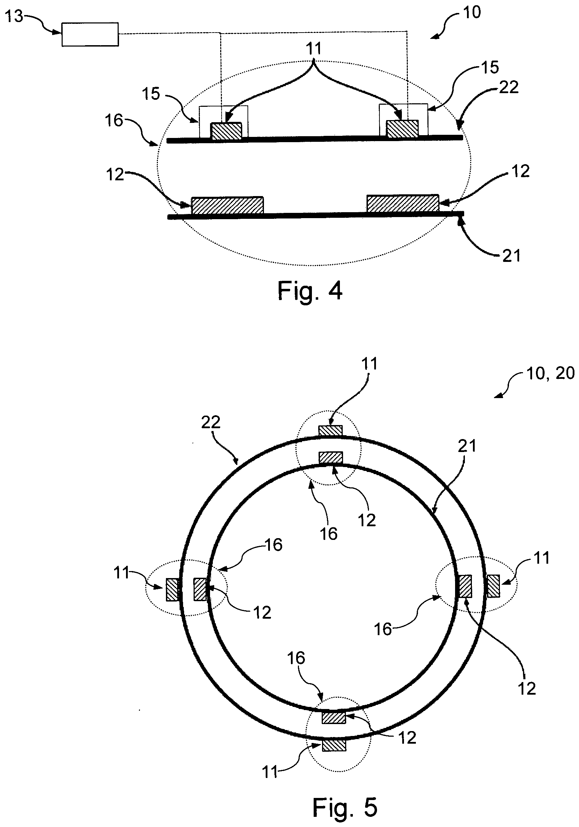

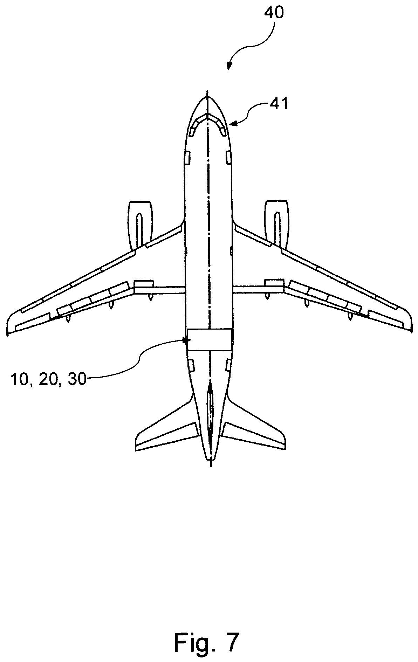

In order to avoid such dismantling, Fig. 2 shows a first configuration of a sensor system 10 according to the present disclosure which can be used with the dewar tank 20 of Fig. 1. The sensor system 10 comprises a sensor arrangement 16 (indicated by a dashed ellipse). The sensor arrangement 16 comprises a first magnetic field sensor 11 and a first permanent magnet element 12 (as will be apparent with regard to the description of Fig. 4 as well as the description further above, more than one magnetic field sensor 11 and more than one permanent magnet element 12 can be used). The first permanent magnet element 12 is arranged within the vacuum 26 (see Fig. 1) on top of the inner shell 22 of the dewar tank 20 (Fig. 1). The first magnetic field sensor 11 is arranged in the vicinity of, in particular above, the first permanent magnet element 12, such that the first permanent magnet element 12 can measure/pick up the magnetic field generated by the first permanent magnet element 12. The first magnetic field sensor 11 is connected to a controller 13 which serves to evaluate measurements of the magnetic field sensor 11. The controller 13 may be any suitable controller, such as a general purpose computer having a CPU and memory components, an FPGA, an ASIC, or any other suitable device. Further, the controller 13 may, for example, be part of a flight computer of an aircraft 40 (Fig. 7).

Because the permanent magnet element 12 is attached to the inner shell 22 and the magnetic field sensor 11 is attached to the outer shell 11, relative movements of the inner shell 22 relative to the outer shell 21 directly translate to relative movements of the first permanent magnet element 12 to the first magnetic field sensor 11. Therefore, when, for example, the inner shell 22 vibrates with regard to the outer shell 21, the magnetic field measured by the first magnetic field sensor 11 deviates in correlation to these vibrations (The permanent magnet element 12 generates a static magnetic field and the relative position of the permanent magnet element 12 with regard to the magnetic field sensor 11 changes in correlation to the vibrations). Also, the magnetization of the first permanent magnet element may, for example, also depend on the temperature of the inner shell (which is in direct thermal contact with the permanent magnet element 12), leading to changes magnetic fields at the location of the magnetic field sensor 11 with changing temperature. This fact can be utilized to infer the temperature of the inner shell 12 from the magnetic field measured by the magnetic field sensor 11.

The first permanent magnet element 12 may be chosen according to the characteristics to monitor. Examples of suitable permanent magnet elements 12 are, for example, samarium-cobalt magnets (SmCo magnets), or neodymium-iron-boron magnets (NdFeB magnets). SmCo magnets are, for example, particularly useful for vibration measurements (for example for measuring a filling level based on vibration modes that correlate with the filling level) because these magnets are relatively stable in their magnetization at cryogenic temperatures. NdFeB magnets, on the other hand, are more sensitive to temperatures changes and are therefore particularly useful for temperature measurements, as described further above in detail.

The sensor system 10 of Fig. 2 allows for simple maintenance or replacement of the magnetic field sensor 11 (as the active element of the sensor system 10), if necessary, without having to dismantle the dewar tank 20.

Fig. 3 shows another configuration of the sensor system 10 with another sensor arrangement 16. The sensor arrangement 16 deviates from the sensor arrangement 16 of Fig. 2 in that the first magnetic field sensor 11 and the first permanent magnet element 12 are both arranged at the outer shell 21 of the dewar tank 20 side by side with a gap/distance between them. Additionally, a superconductor element 14 is placed below the first permanent magnet element 12 on the inner shell 22 of the dewar tank 20. The superconductor element 14 becomes superconducting at cryogenic temperatures, as described further above in detail. The permanent magnet element 12 (just as any magnet) generates closed magnetic field lines.

These field lines are influenced/distorted by the superconducting element 14 depending on the position of the superconducting element 14 with regard to the first permanent magnet element 12 and the first magnetic field sensor 11. Hence, when the inner shell 22 is displaced (e.g., by vibrations) with regard to the outer shell 21, these vibrations cause the magnetic field measured by the first magnetic field sensor 11 to change in correlation with the relative movement of the inner shell 22 with regard to the outer shell 21. Further, the superconducting effect of the superconductor element 14 also depends on the temperature (within the superconducting range), such that, for example, temperature changes can also be detected by the configuration of Fig. 3, since the shape of the magnetic field lines of the first permanent magnet element 12 depends on the temperature of the superconducting element 14 (which is in direct contact with the inner shell 22. Using the superconductor element 14 on the inner shell 22 and the permanent magnet element 12 on the outer shell 21 allows to easily replace the permanent magnet element 12, if it (for example) for some reason gets demagnetized.

Fig. 4 show another possible configuration of a sensor arrangement 16 of the sensor system 10. The configuration of Fig. 4 deviates from the configuration of Fig. 2 in that a second permanent magnet element 12 and a second magnetic field sensor 11 are present. The second magnetic field sensor 11 is also placed on the outer shell 11 at a distance to the first magnetic field sensor 11, and the second permanent magnet element 12 is also placed on the inner shell 21 at a distance to the first permanent magnet element 12. The first magnetic field sensor 11 is placed above the first permanent magnet element 12 and the second magnetic field sensor 11 is placed above the second permanent magnet element 12. The first magnetic field sensor 11 picks up the magnetic field of the first permanent magnet element 12 and the second magnetic field sensor 11 picks up the magnetic field of the second permanent magnet element 12. It should be appreciated that also only one magnetic field sensor 11 may be configured to pick up the magnetic fields of both the first and the second permanent magnet element 12. In such a case, the individual signals can be deviated by data analysis algorithms.

In particular, the first permanent magnet element 12 and the second permanent magnet element 12 (or rather their magnetizations) may have different sensitivities/characteristics with regard to characteristics of the dewar tank 20 to be monitored. For example, the first permanent magnet element 12 may be a SmCo magnet (stable with regard to temperature changes) and the second permanent magnet element 12 may be a NdFeB magnet (temperature sensitive). However, other combinations are conceivable, too. Such a combination of different types of permanent magnet elements 12 may provide additional information to improve accuracy of the corresponding measurement. Further, such a combination could add redundancy.

The first permanent magnet element 12 may in particular be of a type that is stable with regard to changes in temperature. The second permanent magnet element 12 may be of a type that is relatively more sensitive to changes in temperature. In this configuration, the presence of two types of permanent magnet elements 12 (provided that both are previously and individually calibrated against temperature) can provide additional information to improve the accuracy of the measurement system. The two different permanent magnet elements 12 could also be sensitive (e.g., the slope of the magnetic field over temperature is relatively high) to temperature changes in different temperature regions, thereby increasing the sensitive range of the overall sensor arrangement 16 for temperature changes. The second permanent magnet element being "more sensitive" to temperature changes can mean that the first permanent magnet element 12 is largely insensitive to such temperature changes while the first permanent magnet element is not, or it can mean that the second permanent magnet element 12 is sensitive to temperature changes over a larger range of temperatures.

Fig. 4 also shows a magnetic shielding 15 above each of the magnetic field sensors 11 for shielding the magnetic field sensors 11 and/or the permanent magnet elements 12 from stray magnetic fields, as described further above. It should be appreciated that, although only shown in Fig. 4, such a magnetic shielding may also be present in the configurations of Figs. 2, 3, and 5, although not explicitly shown and described in these figures.

Fig. 5 shows a cut view through the dewar tank 20 along cut line A-A in Fig. 1. Further, a sensor system 10 having four sensor arrangements 16, equally spaced around the circumference of the dewar tank 20, is shown in Fig. 5. Although showing the sensor arrangements 16 of Fig. 2, each of the sensor arrangements 16 of Fig. 5 may be embodied according to any one of the configurations described herein and in particular according to any one of the configurations of Figs. 2, 3 and 4. Further, all of the sensor arrangements 16 may be of the same kind or some or all of the sensor arrangements 16 may be of a different kind, depending on the use case. Further, it should be appreciated that more or less than four sensor arrangements 16 may be utilized and that the individual sensor arrangements 16 do not necessarily have to be spaced equally around the circumference of the dewar tank 20. Further, at least some of the sensor arrangements 16 may not even be at the same longitudinal location along the length direction of the dewar tank 20. In any of the configurations described herein, the position, shape, amount, location, etc. of all the required permanent magnet elements 12, superconductor elements 14, and any other elements are to be optimized with respect to the resolution and dynamic range of the magnetic field sensors 11 and with respect to the use case, i.e., with respect to which characteristics is to be monitored.

By placing a sensor arrangement 16 on different positions across the cylindrical walls of the dewar tank 20, for example, displacements and temperature can be monitored in different locations. For example by using long filters in the time domain (to reduce the effect of random vibration and read out noise) over the data collected in each sensing point (i.e., from each sensor arrangement 16), deviations from the expected cross section of the inner shell 21 can be estimated, which, for example, allow for the monitoring of deformations and stress. Further, through a proper model (or, for example, a machine learning algorithm which is trained by proper training data) internal pressure may also be estimated.

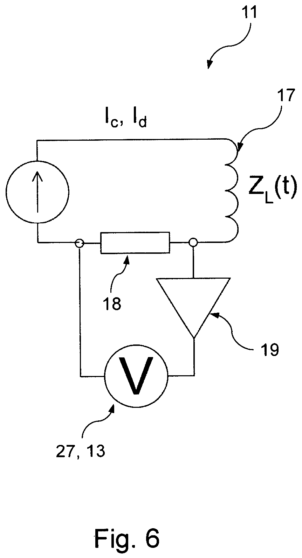

Fig. 6 shows an example circuit of a magnetic field sensor 11, which may be used in any of the embodiments described herein. The example magnetic field sensor 11 comprises a coil 17 that generates a current I_{c} based on the induction caused by the change in the magnetic field due to the relative displacement between the outer shell 22 and the inner shell 21. Further, a constant driving current I_{d} is applied through the coil 17 that generates a magnetic field repelling the magnetic field of the corresponding permanent magnet element 12. The relative movement of the outer shell 22 and the inner shell 21 therefore will cause the repelling force and thus the magnetic field of the coil 17 to change over time. This change in the field is proportional to a change of the coils 17 electrical impedance Z_{L}(t), which can serve as output signal of the magnetic field sensor 11.

In particular, the driving current I_{d} will cause the coil 17 to create a magnetic field. If this field configuration is changed by an e.g. external magnetic field (such as the one created by the permanent magnet element(s) 12) an addtional induced current I_{c} will be induced in the coil 17 that adds/subtracts from the driving current I_{d}. The resulting current (I_{d}+-I_{c}) then flows through a resistor 18 an causes a voltage drop which can be measured by a voltmeter (or similar voltage measurement device) 27. The voltmeter 27 may optionally also be implemented by the controller 13 (see figs. 2, 3 and 4) or may be an individual device that is connected to the controller 13. The measured voltage drop is proportional to the distance between the coil 17 and the permanent magnet element(s) 12 located on the inner shell 22 (e.g., figs. 2 and 4) or the outer shell (e.g., fig. 3). Hence, by monitoring this voltage drop, the dynamics of the tank can be monitored, as described herein further above in detail. An optional amplifier 19 can be used to amplify the measured voltage drop.

However, it should be appreciated that any other typer of magnetic field sensor 11, such as fluxgate sensors, Hall Effect sensors, magnetoresistive sensors, inductive sensors, SQUID (Superconducting Quantum Interference Devices) sensors (if the necessary conditions are established), optically pumped magnetometers, Wiegand sensors, Magneto-Optical sensors, or any other suitable kind of magnetic field sensor 11 can be utilized.

Fig. 7 shows an aircraft 40 having a fuselage 41 and a hydrogen tank 30 in the form of a dewar tank 20, such as the dewar tank 20 of Fig. 1, within the fuselage 41. The dewar tank 20 is equipped with a sensor system 10 according to any one of the embodiments described herein.

It should be noted that "comprising" or "including" does not exclude other elements or steps, and "one" or "a" does not exclude a plurality. It should further be noted that features or steps that have been described with reference to any of the above embodiments may also be used in combination with other features or steps of other embodiments described above. Reference signs in the claims are not to be regarded as limitation.

### LIST OF REFERENCE SIGNS

- 10: sensor system
- 11: magnetic field sensor
- 12: permanent magnet element
- 13: controller
- 14: superconductor element
- 15: magnetic shielding
- 16: sensor arrangement
- 17: coil
- 18: resistor
- 19: amplifier
- 20: dewar tank
- 21: inner shell
- 22: outer shell
- 23: gaseous hydrogen
- 24: liquid hydrogen
- 25: gas/liquid interface
- 26: vacuum
- 27: voltmeter / voltage measurement device
- A-A: cut line
- 30: hydrogen tank
- 40: vehicle / aircraft
- 41: fuselage
- I_{c}: induced current
- I_{d}: driving current

## Claims

1. Sensor system (10) for monitoring characteristics of a dewar tank (20) having an inner shell (21) and an outer shell (22), the sensor system (10) comprising:
a sensor arrangement (16) comprising a first magnetic field sensor (11), and a first permanent magnet element (12); and
a controller (13);
wherein the first magnetic field sensor (11) is connected to the controller (13);
wherein the first magnetic field sensor (11) is configured to be attached to the outer shell (22) of the dewar tank (20);
wherein the first permanent magnet element (12) is configured to be attached to the inner shell (21) or to the outer shell (22) of the dewar tank (20);
wherein the first magnetic field sensor (11) and the first permanent magnet element (12), in a mounted state on the dewar tank (20), are configured to be located in the vicinity of each other, such that the magnetic field sensor (11) is capable of detecting a magnetic field created by the first permanent magnet element (12); and
wherein the controller (13) is configured to measure, via the first magnetic field sensor (11), the magnetic field of the first permanent magnet element and to infer at least one characteristic of the dewar tank (20) based on the detected magnetic field of the first permanent magnet element (12).

2. Sensor system (10) of claim 1, wherein the at least one characteristic comprises at least one of the following:
a temperature of the dewar tank (20); and
a filling level of the dewar tank (20) based on at least one vibration mode of the dewar tank (20) that is correlated to the filling level.

3. Sensor system (10) of any one of the preceding claims, wherein the first permanent magnet element (12) is of one of the following types:
a samarium-cobalt magnet, SmCo magnet; and
a neodymium-iron-boron magnet, NdFeB magnet.

4. Sensor system (10) of any one of the preceding claims, wherein the sensor arrangement (16) further comprises a second permanent magnet element (12) that is of a different type than the first permanent magnet element (12);
wherein the first permanent magnet element (12) and the second permanent magnet element (12) are both configured to be attached to the inner shell (21) of the dewar tank (20).

5. Sensor system (10) of claim 4, wherein the sensor arrangement (16) further comprises a second magnetic field sensor (11);
wherein the first permanent magnet element (12) is configured to be arranged below the first magnetic field sensor (11); and
wherein the second permanent magnet element (12) is configured to be arranged below the second magnetic field sensor (11).

6. Sensor system (10) of claim 4 or 5, wherein the first permanent magnet element (12) is of a type that is stable with regard to changes in temperature; and
wherein the second permanent magnet element (12) is of a type that is relatively more sensitive to changes in temperature.

7. Sensor system (10) of claim 6, wherein the first permanent magnet element (12) is a samarium-cobalt magnet, SmCo magnet; and
wherein the second permanent magnet element (12) is a neodymium-iron-boron magnet, NdFeB magnet.

8. Sensor system (10) of any one of claims 1 to 3, further comprising a superconductor element (14) that becomes superconducting at cryogenic temperatures;
wherein the first magnetic field sensor (11) and the first permanent magnet element (12) are both configured to be attached to the outer shell (22) of the dewar tank (20) next to each other;
wherein the superconducting element (14) is configured to be attached to the inner shell (21) of the dewar tank (20) below the first permanent magnet element (12) and/or below the magnetic field sensor (11).

9. Sensor system (10) of any one of the preceding claims, wherein the sensor system comprises at least two sensor arrangements (16).

10. Sensor system (10) of any one of the preceding claims, wherein the sensor arrangement (16) further comprises a magnetic shielding (15) for shielding the magnetic field sensor (11) and/or the permanent magnet element (12) from stray magnetic fields.

11. Hydrogen tank (30), comprising:
a dewar tank (20) for holding liquified hydrogen, the dewar tank (20) having an inner shell (21) and an outer shell (22); and
a sensor system (10) of any one of the preceding claims.

12. Vehicle (400), comprising:
a fuselage (410); and
a hydrogen tank (30) according to claim 11;
wherein the sensor system (10) is configured to monitor the hydrogen filling level (210) of the fluid container (200).

13. Vehicle (400) of claim 12, wherein the vehicle is an aircraft (400).

## Amended claims

### Amended claims in accordance with Rule 137(2) EPC.

1. Sensor system (10) for monitoring characteristics of a dewar tank (20) having an inner shell (21) and an outer shell (22), the sensor system (10) comprising:
a sensor arrangement (16) comprising a first magnetic field sensor (11), and a first permanent magnet element (12); and
a controller (13);
wherein the first magnetic field sensor (11) is connected to the controller (13);
wherein the first magnetic field sensor (11) is configured to be attached to the outer shell (22) of the dewar tank (20);
wherein the first permanent magnet element (12) is configured to be attached to the inner shell (21) or to the outer shell (22) of the dewar tank (20);
wherein the first magnetic field sensor (11) and the first permanent magnet element (12), in a mounted state on the dewar tank (20), are configured to be located in the vicinity of each other, such that the magnetic field sensor (11) is capable of detecting a magnetic field created by the first permanent magnet element (12); and
wherein the controller (13) is configured to measure, via the first magnetic field sensor (11), a time series of the magnetic field from the first permanent magnet element and to infer at least one characteristic of the dewar tank (20) based on changes of the magnetic field over time that are determined based on the detected time series of the magnetic field of the first permanent magnet element (12).

2. Sensor system (10) of claim 1, wherein the at least one characteristic comprises at least one of the following:
a temperature of the dewar tank (20); and
a filling level of the dewar tank (20) based on at least one vibration mode of the dewar tank (20) that is correlated to the filling level.

3. Sensor system (10) of any one of the preceding claims, wherein the first permanent magnet element (12) is of one of the following types:
a samarium-cobalt magnet, SmCo magnet; and
a neodymium-iron-boron magnet, NdFeB magnet.

4. Sensor system (10) of any one of the preceding claims, wherein the sensor arrangement (16) further comprises a second permanent magnet element (12) that is of a different type than the first permanent magnet element (12);
wherein the first permanent magnet element (12) and the second permanent magnet element (12) are both configured to be attached to the inner shell (21) of the dewar tank (20).

5. Sensor system (10) of claim 4, wherein the sensor arrangement (16) further comprises a second magnetic field sensor (11);
wherein the first permanent magnet element (12) is configured to be arranged below the first magnetic field sensor (11); and
wherein the second permanent magnet element (12) is configured to be arranged below the second magnetic field sensor (11).

6. Sensor system (10) of claim 4 or 5, wherein the first permanent magnet element (12) is of a type that is stable with regard to changes in temperature; and
wherein the second permanent magnet element (12) is of a type that is relatively more sensitive to changes in temperature.

7. Sensor system (10) of claim 6, wherein the first permanent magnet element (12) is a samarium-cobalt magnet, SmCo magnet; and
wherein the second permanent magnet element (12) is a neodymium-iron-boron magnet, NdFeB magnet.

8. Sensor system (10) of any one of claims 1 to 3, further comprising a superconductor element (14) that becomes superconducting at cryogenic temperatures;
wherein the first magnetic field sensor (11) and the first permanent magnet element (12) are both configured to be attached to the outer shell (22) of the dewar tank (20) next to each other;
wherein the superconducting element (14) is configured to be attached to the inner shell (21) of the dewar tank (20) below the first permanent magnet element (12) and/or below the magnetic field sensor (11).

9. Sensor system (10) of any one of the preceding claims, wherein the sensor system comprises at least two sensor arrangements (16).

10. Sensor system (10) of any one of the preceding claims, wherein the sensor arrangement (16) further comprises a magnetic shielding (15) for shielding the magnetic field sensor (11) and/or the permanent magnet element (12) from stray magnetic fields.

11. Hydrogen tank (30), comprising:
a dewar tank (20) for holding liquified hydrogen, the dewar tank (20) having an inner shell (21) and an outer shell (22); and
a sensor system (10) of any one of the preceding claims.

12. Vehicle (400), comprising:
a fuselage (410); and
a hydrogen tank (30) according to claim 11;
wherein the sensor system (10) is configured to monitor the hydrogen filling level (210) of the fluid container (200).

13. Vehicle (400) of claim 12, wherein the vehicle is an aircraft (400).
